# EUROPEAN PATENT SPECIFICATION

(11) **EP 3 301 020 B1**
(45) Date of publication and mention of the grant of the patent: **19.08.2020**
(21) Application number: 17193621.4
(22) Date of filing: 28.09.2017
(51) Int. Cl.: B64C 17/02, B64C 29/02, B64D 9/00, B64C 39/02, B64C 17/04

(54) **FIXED-WING AIRCRAFT AND METHOD FOR OPERATING A FIXED-WING AIRCRAFT**
STARRFLÜGELFLUGZEUG UND VERFAHREN ZUM BETRIEB EINES STARRFLÜGELFLUGZEUGS
AÉRONEF À VOILURE FIXE ET PROCÉDÉ DE FONCTIONNEMENT D'UN AÉRONEF À VOILURE FIXE

(30) Priority: 28.09.2016 DE 102016218769
(43) Date of publication of application: 04.04.2018
(73) Proprietor: Airbus Defence and Space GmbH, 82024 Taufkirchen (DE)
(72) Inventor: Holzer, Werner, 85053 Ingolstadt (DE)
(74) Representative: Isarpatent

(56) References cited:
- WO-A1-2008/007147
- WO-A1-2015/022711
- US-A- 1 710 225
- US-A- 1 883 414
- US-A- 2 916 232
- US-A1- 2011 084 162

## Description

### TECHNICAL FIELD

The invention relates to a fixed-wing aircraft, particularly a vertical take-off fixed-wing aircraft, which is referred to as a "vertical take-off aircraft", and to a method for operating such an aircraft. Vertical take-off and landing describes the ability of an aircraft, drone or even a rocket to take off and land vertically without a runway or landing strip. The acronym VTOL, which stands for vertical take-off and landing, is also commonly used. Fixed-wing aircraft are understood to be aircraft with aerofoils.

### TECHNICAL BACKGROUND

Aircraft are increasingly being used to transport goods, even on a small scale. Aircraft that can take off and land vertically, so-called vertical take-off aircraft, and in particular rotorcraft, for example helicopters or multicopters, are advantageous in such cases. However, fixed-wing aircraft with a vertical take-off capability are also known. Fixed-wing aircraft have a number of advantages over rotorcraft, such as higher maximum speeds, for example, but the transition between vertical take-off or vertical landing and normal flight is comparatively more complex, in technical terms.

DE 10 2014 000 509 A1 describes a fixed-wing aircraft with a vertical take-off and landing aid.

WO 2015/022711 A1 discloses a convertiplane having the ability to take off like a helicopter and then fly horizontally like a conventional aircraft. To this end, the convertiplane particularly comprises two counter-rotating, pivotally mounted ducted propellers being configured to rotate from a vertical orientation to a horizontal orientation. The convertiplane further comprises a static balancing system for controlling the center of gravity of the aircraft consisting of a weight placed in the lower part of the fuselage, self-propelled on the track rack longitudinally to the fuselage.

WO 2008/007147 A1 discloses an aircraft comprising a rigid wing, a structure, a thrust producing means, and a pendulum attached to said structure at a pivoting end thereof, wherein the pendulum is arranged to shift the centre of gravity of said aircraft between at least first and second positions relative to a longitudinal centre line of the aircraft, and wherein in the first position the centre of gravity of said aircraft is relatively far forward to provide a relatively fast flying mode and in the second position the centre of gravity is positioned relatively centrally to provide a relatively slow flying mode.

US 2011/0084162 A1 discloses an autonomous Payload Parsing Management System and Structure for an Unmanned Aerial Vehicle (UAV). A cargo pod of the UAV has an outer aerodynamic shell and one or more internal drive systems for modifying a relative position of one or more cargo provisions contained within the cargo pod. Control logic is configured to, after delivery of a partial portion of the cargo provisions contained within the cargo pod, vary a position of at least a portion of the remaining cargo provisions to maintain a substantially same center of gravity of the UAV relative to a center of gravity prior to delivery of the partial portion.

### SUMMARY OF THE INVENTION

Based on the prior art, one of the objects of the present invention is to provide a fixed-wing aircraft having improved flight characteristics.

One first aspect of the present invention provides a vertical take-off fixed-wing aircraft according to appended independent claim 1, which comprises a load element, which is coupled to a fuselage of the fixed-wing aircraft; an actuator device, by means of which a position of the load element can be varied in relation to the fuselage during a flight of the fixed-wing aircraft to displace a centre of gravity of the fixed-wing aircraft by means of the load element; and a control device, which controls the actuator device such that the load element is arranged in a first position during a vertical take-off operation and/or during a vertical landing operation of the fixed-wing aircraft and in at least one second position during a horizontal flight of the fixed-wing aircraft, wherein the first position is located on the tail of the fixed-wing aircraft, wherein the control device controls the actuator device such that the load element is moved from the first position into the second position thereby facilitating transition of the fixed-wing aircraft from vertical take-off operation to horizontal flight.

Flight characteristics of the fixed-wing aircraft can thus be adapted to respective flight situations during the flight.

A second aspect of the invention provides a method for operating a vertical take-off fixed-wing aircraft according to appended independent claim 10, comprising: changing a position of a load element on a fuselage of the fixed-wing aircraft to displace a centre of gravity of the fixed-wing aircraft, wherein the load element is arranged in a first position during a vertical take-off operation and/or during a vertical landing operation of the fixed-wing aircraft and is arranged in at least one second position during a horizontal flight of the fixed-wing aircraft, wherein the first position is located on the tail of the fixed-wing aircraft, wherein the load element is moved from the first position into the second position thereby facilitating transition of the fixed-wing aircraft from vertical take-off operation to horizontal flight.. Advantageous embodiments and developments are described in the additional dependent claims and in the description with reference to the drawings. According to the invention, the fixed-wing aircraft is a vertical take-off aircraft. The fixed-wing aircraft can thus be used in a particularly flexible manner and with fewer restrictions with regard to selecting suitable take-off and landing sites.

According to the invention, the fixed-wing aircraft comprises a control device, which controls the actuator device in such a manner that the load element is arranged in a first position during a vertical take-off operation, i.e. during vertical take-off, and/or during a vertical landing operation, i.e. during vertical landing, and that it is arranged in at least one second position during horizontal flight.

It is thus possible to take account of different forces and torques which are applied to a vertical take-off fixed-wing aircraft during take-off and landing, on the one hand, and during horizontal flight, on the other hand. In particular, the first position may be defined as an optimum position for the centre of gravity of the fixed-wing aircraft for taking off and/or landing, and the second position may be defined as an optimum position during horizontal flight.

Horizontal flight is understood to mean a flight state in which the fixed-wing aircraft moves in a substantially or precisely horizontal manner as a result of the dynamic lift generated on its fixed wings by thrust. Rotorcraft such as helicopters or multicopters do not usually have horizontal flight motion as they generate their lift and propulsion by one or more driven (almost) horizontal rotors.

According to the invention, the fixed-wing aircraft is designed such that the first position is arranged on the tail of the fixed-wing aircraft. In this manner, if the fixed-wing aircraft is designed as a vertical take-off aircraft, the fixed-wing aircraft can take off (and land) with the tail downwards, minimising a potential torque applied by the weight of the load element to the fixed-wing aircraft as much as possible.

According to the invention, the control device controls the actuator device such that the load element is moved from the first position into the second position thereby facilitating transition of the fixed-wing aircraft from vertical take-off operation to horizontal flight. In this manner, the orientation of the fixed-wing aircraft can be changed simply and effectively by displacing the centre of gravity of the fixed-wing aircraft.

According to an advantageous development, the control device is designed to adjust, adapt and/or regulate the second position based on a current flight parameter and/or aircraft state of the fixed-wing aircraft. A flight parameter is in particular understood to mean a speed and/or orientation of the fixed-wing aircraft. This thus makes it possible to have a particularly stable flight, for example. An aircraft state is, for example, understood to mean a state in which the fixed-wing aircraft is landed in a vertical position, a state in which the fixed-wing aircraft is ready for vertical take-off, or a state in which one or more systems of the fixed-wing aircraft do not operate.

The second position can also be adjusted additionally or alternatively based on the weight of the load element, especially if the load element has a variable weight during flight. This may, for example, be the case if the load element contains kerosene to refuel another aircraft during flight and loses weight during the refuelling process.

According to another advantageous development, the load element is arranged on the outside of the fuselage of the fixed-wing aircraft. In this manner, the load element can be designed to have larger dimensions than the fuselage of the aircraft. In addition, the centre of gravity of the fixed-wing aircraft can also be positioned outside the fuselage of the fixed-wing aircraft by means of a load element having a corresponding weight. In addition, the load element can thus be easier to access for loading or unloading purposes.

According to another advantageous development, the load element is coupled to a coupling element of the actuator device by means of a rotatable joint. The load element can be coupled to the coupling element by means of the rotatable joint such as to determine an orientation of the load element in relation to the fuselage of the fixed-wing aircraft by the centre of gravity, and in particular exclusively by the centre of gravity. The load element can thus always be aligned in accordance with the gravity applied to the load element, with the result that it is not subject to any torques, or at least any significant torques, at the point at which the load element is coupled to the coupling element.

According to another advantageous development, the actuator device comprises a worm shaft comprising an outer thread, which can also be referred to as a worm for short. The coupling element may be designed with an inner thread, which is placed on the outer thread of the worm shaft, and can be prevented from rotating about the worm shaft by a guide element of the actuator device. Thus, by rotating the worm shaft, the coupling element to which the load element is coupled can be moved along the worm shaft and along the guide element to displace the centre of gravity of the load element, and thus the fixed-wing aircraft. Coupling elements with particularly heavy load elements can be advantageously continuously moved in this manner.

According to another advantageous development, the fixed-wing aircraft comprises support legs which are designed or equipped such that the fixed-wing aircraft can be placed vertically on a ground surface on the support legs. The support legs can, in particular, be designed such that the load element does not touch, or barely touches, the ground surface in the first position. The fixed-wing aircraft can be designed such that the load element is arranged in full or in part beneath the fuselage of the fixed-wing aircraft in the first position when the fixed-wing aircraft is on the ground surface. This thus ensures that the fixed-wing aircraft has a particularly low centre of gravity, which means that the fixed-wing aircraft can stand on the ground surface in a particularly stable manner.

According to another advantageous development, the support legs are arranged on aerofoils of the fixed-wing aircraft. The fixed-wing aircraft is thus able to stand in a particularly stable manner when it has landed.

According to another advantageous development, the load element is arranged inside the fuselage. The centre of gravity of the fixed-wing aircraft can thus be positioned and remain inside the fuselage of the fixed-wing aircraft. In addition, the load element is thus particularly well protected from external influences and affects the flight characteristics of the fixed-wing aircraft to a lesser extent.

The method according to the second aspect of the present invention may advantageously be modified according to one, some or all of the described developments of the fixed-wing aircraft according to the first aspect.

The above embodiments and developments can be combined in any conceivable combination as long as this falls within the scope of the appended claims. Further possible embodiments, developments and uses of the invention also include combinations of features of the invention described previously or below with respect to the embodiments, even if these are not explicitly specified, insofar as they fall within the scope of the appended claims. In particular, persons skilled in the art will also add individual aspects as improvements or additions to the relevant basic form of the present invention.

### BRIEF DESCRIPTION OF THE DRAWINGS

The present invention is explained below in greater detail with the aid of embodiments specified in the schematic figures, in which:
- Fig. 1: is a schematic block diagram of a fixed-wing aircraft according to an embodiment of the invention;
- Fig. 2: is a first schematic side view of a fixed-wing aircraft according to another embodiment of the present invention;
- Fig. 3: is a second schematic side view of the fixed-wing aircraft according to Fig. 2;
- Fig. 4: is a schematic graphic to explain a mode of operation of the fixed-wing aircraft from Fig. 2 and Fig. 3;
- Fig. 5: is a schematic view of a detail of a longitudinal section through a fixed-wing aircraft according to another embodiment of the present invention;
- Fig. 6: is a schematic view of a detail of a cross section through the fixed-wing aircraft according to Fig. 6; and
- Fig. 7: is a schematic flow diagram to explain a method according to another embodiment of the present invention.

The accompanying drawings should convey further understanding of the embodiments of the invention. They illustrate embodiments of the invention and clarify principles and concepts behind the invention in conjunction with the description. Other embodiments and many of the described advantages are apparent with regard to the drawings. The elements of the drawings are not necessarily illustrated such that they are true to scale with respect to one another.

In the figures of the drawings, like, functionally like and identically acting elements, features and components are furnished with the same reference numerals in each case unless otherwise specified.

### DESCRIPTION OF EMBODIMENTS

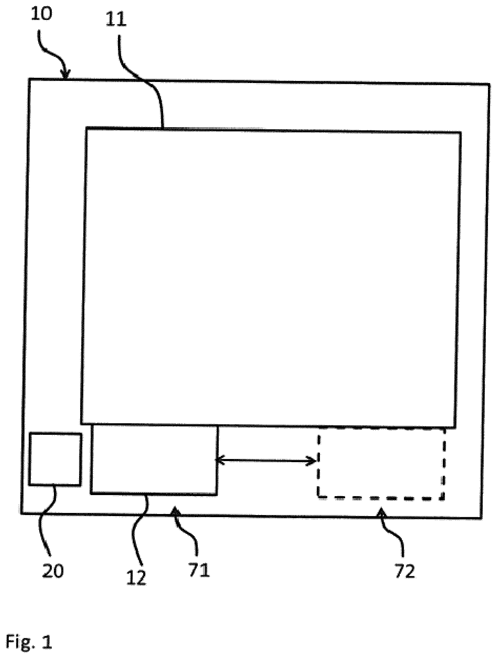

Fig. 1 shows a schematic block diagram of a fixed-wing aircraft 10 according to an embodiment of the invention.

The fixed-wing aircraft 10 comprises a fuselage 11 to which a load element 12 is coupled. The load element 12 may, for example, be a container, a tank or the like. The load element 12 is shown schematically in Fig. 1 as being arranged outside the fuselage 11; however, the load element may also be arranged in full, or only in part, inside the fuselage 11.

The fixed-wing aircraft 10 also comprises an actuator device 20, by means of which a position 71, 72 of the load element 12 can be varied in relation to the fuselage 11, particularly during a flight of the fixed-wing aircraft 10, so as to displace a centre of gravity of the fixed-wing aircraft 10 by means of the load element 12, or to be more specific by means of a mass of the load element 12. A position of a point or element at or by means of which the load element 12 is coupled to the fuselage 11 can preferably be displaced in order to displace the load element 12 and thus its mass.

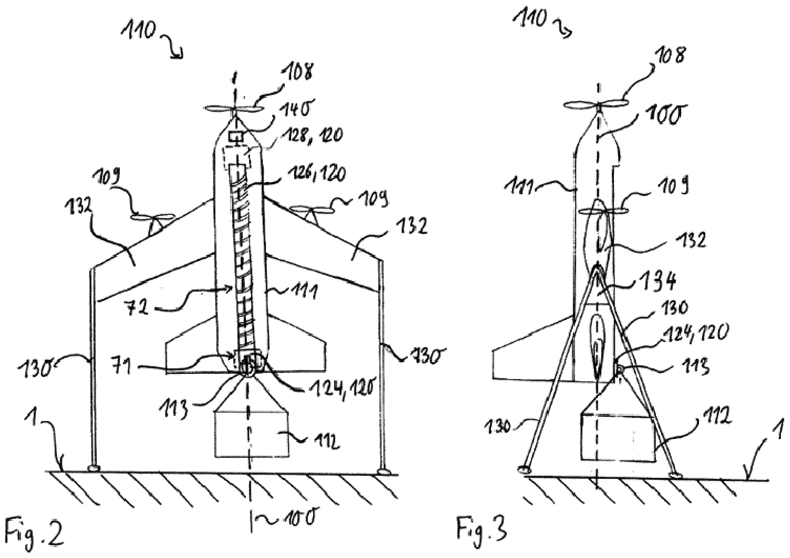

Fig. 2 shows a first schematic side view of a fixed-wing aircraft 110 according to another embodiment of the present invention. In Fig. 2 the fixed-wing aircraft 110 is shown standing on a ground surface 1, by way of example, to clearly illustrate the stable position of the fixed-wing aircraft 110.

Fig. 3 shows the same fixed-wing aircraft 110 in a side view, the view according to Fig. 2 being seen by viewing object in Fig. 3 from the right.

The fixed-wing aircraft 110 comprises a fuselage 111 on which aerofoils 132 are arranged on both sides. A main rotor 108 on the nose of the fuselage 111 and one secondary rotor 109 on each of the aerofoils 132 provide thrust for the fixed-wing aircraft 110. It is evident that other means to provide thrust can be provided rather than rotors 108, 109.

Two support legs 130 are arranged on each end of the aerofoils 132, said support legs being arranged at an acute angle, i.e. in a V-shape, with respect to one another, and thus allowing the fixed-wing aircraft 110 to stand in a particularly stable position on the ground surface 1, for example on a runway or landing strip, a helipad or similar.

A winglet 134 is advantageously used to further stabilise the fixed-wing aircraft 110 and the support legs 130 on each of the two apexes at which the two support legs 130 meet on each side of the fixed-wing aircraft 110.

Other shapes of support legs and/or support legs in different quantities may also be provided on the fixed-wing aircraft 110 instead of the support legs 130 shown. The support legs 130 may also be attached at locations other than the end of the aerofoils 132, for example at other locations on the aerofoils 132 or on the fuselage 111 of the fixed-wing aircraft 110.

A worm shaft 126 with an outer thread is formed along a longitudinal axis 100 of the fixed-wing aircraft 110 on a lower side of the fixed-wing aircraft 110, i.e. on a side that is directed downwards, towards the Earth's surface, during horizontal flight. A coupling element 124 with an inner thread is attached to the worm shaft 126 such that the inner thread of the coupling element 124 engages in the outer thread of the worm shaft 126. A motor 128, for example an electric motor, is designed or equipped to rotate the worm shaft 126.

A guide element (not shown) may be provided to prevent the coupling element 124 rotating about the rotating worm shaft 126. The coupling element 124 can thus be moved along the worm shaft 26 by rotating the worm shaft 126. The motor 128, the worm shaft 126, the coupling element 124 and the guide element can be regarded as parts of an actuator device 120 for the fixed-wing aircraft 110.

A load element 12 can be coupled to or is coupled to the coupling element 124. As shown in Fig. 2 and Fig. 3, this can be achieved by means of a rotatable joint 113. In a simple case, the joint 113 may consist of a pivotally mounted ring in which the load element 112 can be hooked, by means of a steel cable for example. The coupling element 124 may also merely comprise a ring through which the steel cable of the load element 112 can be pulled.

A suspension point (or a coupling point) of the load element 112 on the fuselage of the fixed-wing aircraft 110 can thus be displaced by means of the actuator device 120 by displacing the coupling element 124 along the worm shaft 126, especially from a first position 71 on the tail of the fuselage 111 to a second position 72, which may, for example, be arranged in a region covering between twenty and eighty percent of the length of the fuselage 111, preferably between thirty and seventy percent of the length of the fuselage 111.

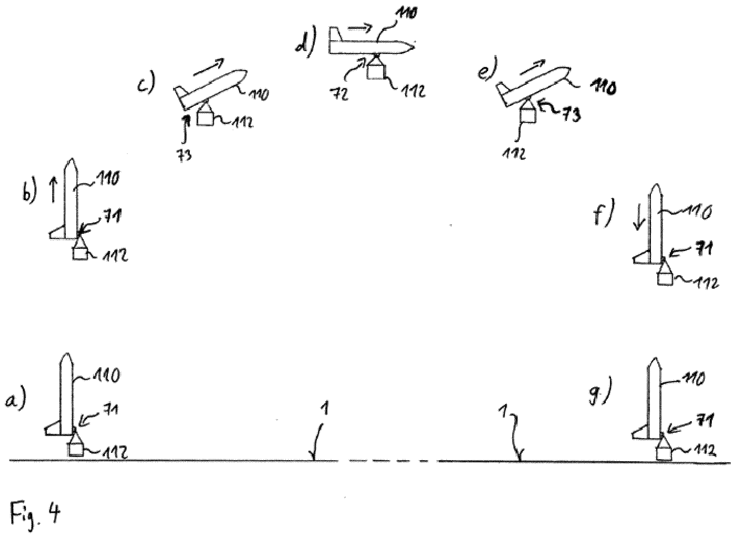

The actuator device 120 may be controlled by a control device 140 of the fixed-wing aircraft 110 to adjust, adapt and/or regulate the position 71, 72 of the coupling element 124 to a current flight parameter and/or aircraft state. Advantageous embodiments of the control device 140 are also explained in detail on the basis of Fig. 4 below. The control device 140 is shown in Fig. 2 as being arranged in the nose of the fixed-wing aircraft 110, by way of example. The control device 140 may in particular comprise a memory and a processor, which executes software stored in the memory. If the control device 140 is designed in a special manner, this is understood to mean that the software in the control device 140 is designed accordingly.

The current flight parameter and/or the current aircraft state can be recorded by sensors arranged on the fixed-wing aircraft 110. Alternatively or in addition, the act of recording the current flight parameter and/or current aircraft state may include receiving data by means of a radio interface in the fixed-wing aircraft 110, the received data indicating a current flight parameter and/or a current aircraft state of the fixed-wing aircraft 110.

The fixed-wing aircraft 110 may be a manned or unmanned, preferably unmanned, fixed-wing aircraft, for example a so-called drone. The fixed-wing aircraft 110 may in this case be designed to be remote-controlled and/or designed such that it can be steered automatically or independently.

The load element 112 can preferably be coupled or is coupled, for example by means of the described joint 113, indirectly via the coupling element 124 to the fuselage 111 of the fixed-wing aircraft 110 such that an orientation of the load element 112 is determined by gravity, in particular solely by gravity. As shown in Fig. 2, the load element 112 hangs vertically downwards, for example, if the fixed-wing aircraft 110 is resting on the ground surface 1 and the coupling element 124 is located in the first position 71.

The support legs 130 can be designed such that the load element 112 hangs free in this state, i.e. does not touch the ground surface 1, or barely touches the ground surface, but does not rest on the ground surface 1. The weight or mass of the load element 112 thus helps to position the centre of gravity of the fixed-wing aircraft 110 so as to be as low as possible and to be between the support legs 130, with the result that the fixed-wing aircraft 110 stands in a particularly stable position.

Fig. 4 shows a schematic graphic explaining a mode of operation of the fixed-wing aircraft 110 from Fig. 2 and Fig. 3, in particular to explain a possible design of the control device 140 for the fixed-wing aircraft 110.

Fig. 4 a) to g) show consecutive schematic representations of how the fixed-wing aircraft 110 takes off vertically, passes into horizontal flight mode, from there passes into vertical landing flight mode and then lands vertically. For reasons of clarity, the fixed-wing aircraft 110 is only shown as a rough shape in Fig. 4, and in particular without the support legs 130.

During vertical take-off, i.e. during a vertical take-off operation, as illustrated in Fig. 4a), the load element 112 is advantageously located in the first position 71, i.e. on the tail of the fixed-wing aircraft 110 and thus at the lowest possible point and at the point furthest from the main rotor 108.

The fixed-wing aircraft 110 then remains in vertical flight for a period of time, as indicated in Fig. 4b), the load element 112 still being arranged in the first position 71.

After reaching a desired height, e.g. on the basis of a flight plan saved in the control device 140, the control device 140 controls the actuator device 120 to gradually move the coupling element 124 into a second position 72 which is favourable for horizontal flight.

To this end, as shown in Fig. 4c), the control device 140 controls the actuator device 120, i.e. in particular the motor 128, for the transition between vertical and horizontal flight to move the coupling element 124 into at least one third position 73, which is arranged between the first position 71 and the second position 72. The coupling element 124 may remain in the at least one third position 73 temporarily, or may pass through all positions between the first position 71 and the second position 72 without stopping. The coupling element 124 may be moved along the worm shaft 126 at a constant speed or at a variable speed. In particular, the movement of the coupling element 124 may be adapted to a current flight parameter and/or a current flight state of the fixed-wing aircraft 110 by means of the control device 140.

As a result of the centre of gravity of the fixed-wing aircraft 110 changing due to the changing position of the load element 112, the fixed-wing aircraft 110 advantageously inclines from the vertical flight position to the horizontal flight position.

The second position 72 in which the coupling element 124 and the load element 112 are located during a horizontal flight of the fixed-wing aircraft 110 is advantageously adapted to an ideal arrangement of the centre of gravity of the fixed-wing aircraft 110 during horizontal flight, as shown in Fig. 4d).

In order to transfer from horizontal flight to a vertical landing position, i.e. to begin the vertical landing operation, the actuator device 120 is controlled by the control device 140 to move the coupling element 124 back to the first position 71. This can take place in the exact reverse sequence as described in relation to the transition from vertical take-off to horizontal flight. In particular, as shown in Fig. 4e), the coupling element 124 may remain in the at least one third position 73, or may pass through all positions between the first position 71 and the second position 72 without stopping.

As shown in Fig. 4f), during vertical landing the coupling element 124 is again in the first position 71 and the load element 112 hangs vertically downwards due to gravity. This position is also maintained when the fixed-wing aircraft 110 has reached the ground, as shown in Fig. 4g).

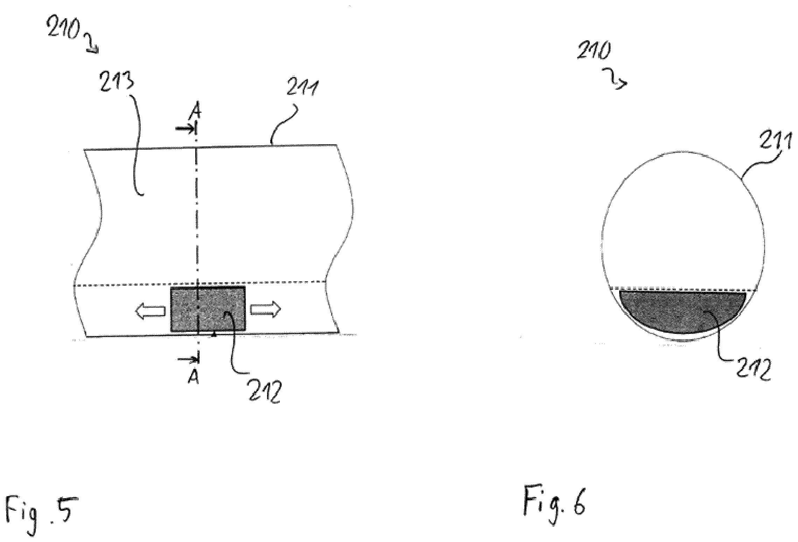

Fig. 5 is a schematic view of a detail of a longitudinal section through a fixed-wing aircraft 210 according to another embodiment of the present invention. The fixed-wing aircraft 210 is a variation of the fixed-wing aircraft 10 or the fixed-wing aircraft 110 and can be adapted in accordance with all modifications and developments described in relation to these fixed-wing aircraft and vice versa.

The fixed-wing aircraft 210 differs from the fixed-wing aircraft 110 in particular in that a load element 212 (rather than the load element 112 in the fixed-wing aircraft 110) is provided in the fixed-wing aircraft 210, which load element is arranged inside a fuselage 211 of the fixed-wing aircraft 210 (instead of the fuselage 111 of the fixed-wing aircraft 110). As shown in Fig. 5, the load element 212 may, for example, be arranged in a bottom third of the fuselage 211, for example separated by a cover from the remaining inner space 213 of the fuselage 211.

A relevant position of the load element 212 can be moved along the fuselage 211 by means of an actuator device (not shown) of the fixed-wing aircraft 210, which actuator device can be controlled by a control device (likewise not shown) for the fixed-wing aircraft 210. The actuator device for the fixed-wing aircraft 210 may, for example, be controlled by the control device for the fixed-wing aircraft 210 as mentioned above in relation to the control device 140 and the actuator device 120 for the fixed-wing aircraft 110 and shown in Fig. 4.

In particular, the load element 212 may be displaced inside the fuselage 211 and along the fuselage 211 between different positions, preferably when changing from a vertical take-off operation to a horizontal flight position or from a horizontal flight position to a vertical landing position, i.e. a vertical landing operation, of the fixed-wing aircraft 210. The load element 212 may itself comprise an inner thread with which it is placed on a worm shaft of the fixed-wing aircraft 210 to move the load element 212 along the fuselage 211 or is connected or coupled to a coupling element which is in turn positioned on the worm shaft by means of an inner thread. A guide to prevent the load element 212 rotating about the worm shaft may be provided by guide rails, for example, and/or by optimally fitting the load element 212 into a separate sub-area of the inner space 213 of the fuselage 211 in relation to its cross section, as shown in Fig. 6.

Fig. 6 is a schematic view of a detail of the cross-section of the fixed-wing aircraft according to Fig. 6, specifically along the sectional plane A-A in Fig. 5. The load element 212, which may, for example, be designed as a tank or merely as ballast, may, as shown in Fig. 6, have a cross section which consists of an arc with a chord. The load element 212 is preferably arranged at the bottom end of the fuselage 211, i.e. at the bottom during horizontal flight of the fixed-wing aircraft 210.

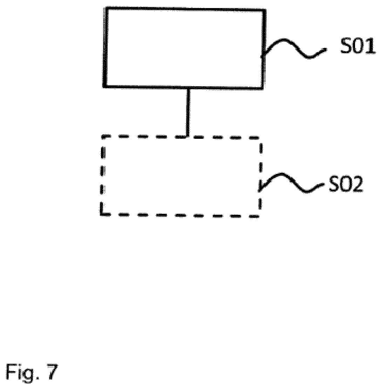

Fig. 7 shows a schematic flow diagram to explain a method for operating a fixed-wing aircraft according to another embodiment of the present invention.

The method according to Fig. 7 may be used to operate the fixed-wing aircraft 10; 110; 210 according to the invention and can be adapted in accordance with all modifications and developments described in relation to the fixed-wing aircraft according to the invention, in particular the fixed-wing aircraft 10; 110; 210, and vice versa.

In one step S01, a position 71, 72 of a load element 12; 112; 212 on a fuselage 11; 111; 211 of the fixed-wing aircraft 10; 110; 210 is changed to displace a centre of gravity of the fixed-wing aircraft 10; 110; 210, for example as described in relation to the fixed-wing aircrafts 10; 110; 210, and particularly in relation to the control device 140 and the actuator device 120 for the fixed-wing aircraft 110.

In particular, the fixed-wing aircraft 110; 210 to be operated may be designed as a vertical take-off aircraft, and the load element 112; 212 may be arranged in a first position 71 during a vertical take-off operation and/or during a vertical landing operation and said load element may be arranged in at least one second position 72 during horizontal flight, similar to the description above, particularly in relation to Fig. 4.

In particular, the position 71, 72, 73 of the load element 112; 212 may be varied to pass from, or during a transition from, a vertical take-off position to horizontal flight and/or to pass from, or during a transition from, horizontal flight to a vertical landing position.

The method may optionally include recording S02 at least one current flight parameter and/or at least one current aircraft state. In this case, the second position 72 may be adjusted, adapted and/or regulated based on a recorded current flight parameter and/or a recorded current aircraft state of the fixed-wing aircraft 110; 210, to stabilise the fixed-wing aircraft 110; 210 for example.

The current flight parameter and/or the current aircraft state can be recorded S02 by sensors arranged on the fixed-wing aircraft 110; 210. Alternatively or in addition, the act of recording S02 the current flight parameter and/or the current aircraft state may include receiving data by means of a radio interface in the fixed-wing aircraft 110; 210, the received data indicating a current flight parameter and/or a current aircraft state of the fixed-wing aircraft 110.

Various features to improve the accuracy of the description in one or more examples are summarised in the previous detailed description. However, it should be made quite clear that the above description is merely given by way of example and is by no means restrictive. It serves to cover all alternatives, modifications and equivalents of the various features and embodiments, insofar as they fall within the scope of the appended claims. Many other examples will be immediately and directly evident to a person skilled in the art on the basis of such a person's technical expertise in consideration of the above description.

The embodiments have been selected and described to explain the principles underlying the invention and its possible practical applications as comprehensively as possible. As a result, persons skilled in the art will be able to modify and use the invention and its various embodiments in an optimum manner in relation to the intended purpose. The terms "containing" and "comprising" are used as neutral expressions in the claims and in the description to cover the corresponding concept of "including". Furthermore, use of the terms "one" or "a" shall not rule out the possibility of a plurality of the features and components thus described.

### REFERENCE NUMERALS

- 1: ground surface
- 10: fixed-wing aircraft
- 11: fuselage
- 12: load element
- 20: actuator device
- 71: first position
- 72: second position
- 73: third position
- 100: longitudinal axis
- 108: main rotor
- 109: secondary rotor
- 110: fixed-wing aircraft
- 111: fuselage
- 112: load element
- 113: joint
- 120: actuator device
- 124: coupling element
- 126: worm shaft
- 128: motor
- 130: support leg
- 132: aerofoils
- 134: winglet
- 140: control device
- 210: fixed-wing aircraft
- 211: fuselage
- 212: load element
- 213: inner space

## Claims

1. Fixed-wing aircraft (10; 110; 210), wherein the fixed-wing aircraft (10; 110; 210) is a vertical take-off aircraft, comprising:
a load element (12; 112; 212), which is coupled to a fuselage (11; 111; 211) of the fixed-wing aircraft (10; 110; 210);
an actuator device (20; 120), by means of which a position (71, 72) of the load element (12; 112; 212) can be varied in relation to the fuselage (11; 111; 211) during a flight of the fixed-wing aircraft (10; 110; 210) to displace a centre of gravity of the fixed-wing aircraft (10; 110; 210) by means of the load element (12; 112; 212); and
a control device (140), which controls the actuator device (120) such that the load element (112; 212) is arranged in a first position (71) during a vertical take-off operation and/or during a vertical landing operation of the fixed-wing aircraft (110; 210) and in at least one second position (72) during a horizontal flight of the fixed-wing aircraft (110; 210), wherein the first position (71) is located on the tail of the fixed-wing aircraft (110; 210),
**characterised in that** the control device (140) controls the actuator device (120) such that the load element (112; 212) is moved from the first position (71) into the second position (72) thereby facilitating transition of the fixed-wing aircraft (10; 110; 210) from vertical take-off operation to horizontal flight.

2. Fixed-wing aircraft (110; 210) according to claim 1,
wherein the control device (140) is designed to adjust, adapt and/or regulate the second position (72) based on a current flight parameter and/or aircraft state of the fixed-wing aircraft (110; 210).

3. Fixed-wing aircraft (110) according to claim 1 or 2,
wherein the load element (112) is located on the outside of the fuselage (111) of the fixed-wing aircraft (110).

4. Fixed-wing aircraft (110) according to claim 3,
wherein the load element (112) is coupled to a coupling element (124) of the actuator device (120) by means of a rotatable joint (113).

5. Fixed-wing aircraft (110) according to claim 4,
wherein the load element (124) is coupled to the coupling element (124) via the rotatable joint (113) such that an orientation of the load element (112) in relation to the fuselage (111) of the fixed-wing aircraft (110) is determined by gravity.

6. Fixed-wing aircraft (110) according to either claim 4 or claim 5,
wherein the actuator device (120) comprises a worm shaft (126); and wherein the coupling element (124) is designed with an inner thread, which is placed on an outer thread of the worm shaft (126).

7. Fixed-wing aircraft (110) according to any of claims 1 to 6, comprising: support legs (130) which are designed such that the fixed-wing aircraft (110) can be placed vertically on a ground surface on the support legs (130).

8. Fixed-wing aircraft (110) according to claim 7,
wherein the support legs (130) are arranged on aerofoils (132) of the fixed-wing aircraft (110).

9. Fixed-wing aircraft (210) according claim 1 or 2,
wherein the load element (212) is arranged inside the fuselage (211).

10. Method for operating a fixed-wing aircraft (10; 110; 210), wherein the fixed-wing aircraft (10; 110; 210) is a vertical take-off aircraft, the method comprising the following steps:
changing (S01) a position (71, 72) of a load element (12; 112; 212) on a fuselage (11; 111; 211) of the fixed-wing aircraft (10; 110; 210) to displace a centre of gravity of the fixed-wing aircraft (10; 110; 210), wherein the load element (112; 212) is arranged in a first position (71) during a vertical take-off operation and/or during a vertical landing operation of the fixed-wing aircraft (10; 110; 210) and is arranged in at least one second position (72) during a horizontal flight of the fixed-wing aircraft (10; 110; 210), wherein the first position (71) is located on the tail of the fixed-wing aircraft (110; 210),
**characterised in that** the load element (112; 212) is moved from the first position (71) into the second position (72) thereby facilitating transition of the fixed-wing aircraft (10; 110; 210) from vertical take-off operation to horizontal flight.

11. Method according to claim 10,
wherein the method includes recording (S02) at least one current flight parameter and/or at least one current aircraft state; and
wherein the second position (72) is adjusted, adapted and/or regulated based on at least one recorded current flight parameter and/or at least one recorded current aircraft state of the fixed-wing aircraft (110; 210).

## Patentansprüche

1. Starrflügelflugzeug (10; 110; 210), wobei das Starrflügelflugzeug (10; 110; 210) ein Senkrechtstartflugzeug ist, das Folgendes umfasst:
ein Lastelement (12; 112; 212), das mit einem Rumpf (11; 111; 211) des Starrflügelflugzeugs (10; 110; 210) gekoppelt ist;
eine Aktuatorvorrichtung (20; 120), mittels derer eine Position (71, 72) des Lastelements (12; 112; 212) in Bezug auf den Rumpf (11; 111; 211) während eines Flugs des Starrflügelflugzeugs (10; 110; 210) geändert werden kann, um den Schwerpunkt des Starrflügelflugzeugs (10; 110; 210) mittels des Lastelements (12; 112; 212) zu verlagern; und
eine Steuervorrichtung (140), die die Aktuatorvorrichtung (120) in der Weise steuert, dass das Lastelement (112; 212) während eines Senkrechtstartbetriebs und/oder während eines Senkrechtlandebetriebs des Starrflügelflugzeugs (110; 210) an einer ersten Position (71) angeordnet ist und während eines horizontalen Flugs des Starrflügelflugzeugs (110; 210) an wenigstens einer zweiten Position (72) angeordnet ist, wobei sich die erste Position (71) am hinteren Ende des Starrflügelflugzeugs (110; 210) befindet,
**dadurch gekennzeichnet, dass** die Steuervorrichtung (140) die Aktuatorvorrichtung (120) in der Weise steuert, dass das Lastelement (112; 212) von der ersten Position (71) in die zweite Position (72) bewegt wird, um den Übergang des Starrflügelflugzeugs (10; 110; 210) von dem Senkrechtstartbetrieb zu dem horizontalen Flug zu erleichtern.

2. Starrflügelflugzeug (110; 210) nach Anspruch 1,
wobei die Steuervorrichtung (140) entworfen ist, um die zweite Position (72) anhand eines aktuellen Flugparameters und/oder des Flugzeugzustands des Starrflügelflugzeugs (110; 210) einzustellen, anzupassen und/oder zu regulieren.

3. Starrflügelflugzeug (110) nach Anspruch 1 oder 2,
wobei sich das Lastelement (112) an der Außenseite des Rumpfes (111) des Starrflügelflugzeugs (110) befindet.

4. Starrflügelflugzeug (110) nach Anspruch 3,
wobei das Lastelement (112) mit einem Kopplungselement (124) der Aktuatorvorrichtung (120) mittels eines Drehgelenks (113) gekoppelt ist.

5. Starrflügelflugzeug (110) nach Anspruch 4,
wobei das Lastelement (124) mit dem Kopplungselement (124) über das Drehgelenk (113) in der Weise gekoppelt ist, dass eine Orientierung des Lastelements (112) in Bezug auf den Rumpf (111) des Starrflügelflugzeugs (110) durch die Schwerkraft bestimmt wird.

6. Starrflügelflugzeug (110) nach Anspruch 4 oder nach Anspruch 5,
wobei die Aktuatorvorrichtung (120) eine Schneckenwelle (126) enthält; und
wobei das Kopplungselement (124) mit einem Innengewinde entworfen ist, das auf einem Außengewinde der Schneckenwelle (126) angeordnet ist.

7. Starrflügelflugzeug (110) nach einem der Ansprüche 1 bis 6, das Folgendes umfasst: Stützbeine (130), die so entworfen sind, dass das Starrflügelflugzeug (110) auf einer Bodenoberfläche auf den Stützbeinen (130) vertikal angeordnet werden kann.

8. Starrflügelflugzeug (110) nach Anspruch 7,
wobei die Stützbeine (130) an Trag- und /oder Steuerflächen (132) des Starrflügelflugzeugs (110) angeordnet sind.

9. Starrflügelflugzeug (210) nach Anspruch 1 oder 2, wobei das Lastelement (212) innerhalb des Rumpfes (211) angeordnet ist.

10. Verfahren zum Betreiben eines Starrflügelflugzeugs (10; 110; 210), wobei das Starrflügelflugzeug (10; 110; 210) ein Senkrechtstartflugzeug ist, wobei das Verfahren die folgenden Schritte umfasst:
Ändern (S01) einer Position (71, 72) eines Lastelements (12; 112; 212) an einem Rumpf (11; 111; 211) des Starrflügelflugzeugs (10; 110; 210), um den Schwerpunkt des Starrflügelflugzeugs (10; 110; 210) zu verlagern, wobei das Lastelement (112; 212) während eines Senkrechtstartbetriebs und/oder während eines Senkrechtlandebetriebs des Starrflügelflugzeugs (10; 110; 210) an einer ersten Position (71) und während eines horizontalen Fluges des Starrflügelflugzeugs (10; 110; 210) an wenigstens einer zweiten Position (72) angeordnet ist, wobei sich die erste Position (71) am hinteren Ende des Starrflügelflugzeugs (110; 210) befindet,
**dadurch gekennzeichnet, dass** das Lastelement (112; 212) von der ersten Position (71) in die zweite Position (72) bewegt wird, um den Übergang des Starrflügelflugzeugs (10; 110; 210) von dem Senkrechtstartbetrieb zu dem horizontalen Flug zu erleichtern.

11. Verfahren nach Anspruch 10,
wobei das Verfahren das Aufzeichnen (S02) wenigstens eines aktuellen Flugparameters und/oder wenigstens eines aktuellen Flugzeugzustands umfasst; und
wobei die zweite Position (72) anhand wenigstens eines aufgezeichneten aktuellen Flugparameters und/oder wenigstens eines aufgezeichneten aktuellen Flugzeugzustands des Starrflügelflugzeugs (110; 210) eingestellt, angepasst und/oder reguliert wird.

## Revendications

1. Aéronef à voilure fixe (10 ; 110 ; 210), l'aéronef à voilure fixe (10 ; 110 ; 210) étant un aéronef à décollage vertical, comprenant :
un élément de charge (12 ; 112 ; 212), qui est couplé à un fuselage (11 ; 111 ; 211) de l'aéronef à voilure fixe (10 ; 110 ; 210) ;
un dispositif actionneur (20 ; 120), au moyen duquel il est possible de faire varier une position (71, 72) de l'élément de charge (12 ; 112 ; 212) par rapport au fuselage (11 ; 111 ; 211) au cours d'un vol de l'aéronef à voilure fixe (10 ; 110 ; 210) pour déplacer un centre de gravité de l'aéronef à voilure fixe (10 ; 110 ; 210) au moyen de l'élément de charge (12 ; 112 ; 212) ; et
un dispositif de commande (140), qui commande le dispositif actionneur (120) de telle façon que l'élément de charge de (112 ; 212) soit disposé dans une première position (71) au cours d'une opération de décollage vertical et/ou au cours d'une opération d'atterrissage vertical de l'aéronef à voilure fixe (110 ; 210) et dans au moins une deuxième position (72) au cours d'un vol horizontal de l'aéronef à voilure fixe (110 ; 210), la première position (71) étant située sur l'empennage de l'aéronef à voilure fixe (110 ; 210),
**caractérisé en ce que** le dispositif de commande (140) commande le dispositif actionneur (120) de telle façon que l'élément de charge (112 ; 212) soit déplacé de la première position (71) à la deuxième position (72), ce qui facilite la transition de l'aéronef à voilure fixe (10 ; 110 ; 210) entre l'opération de décollage vertical et le vol horizontal.

2. Aéronef à voilure fixe (110 ; 210) selon la revendication 1,
dans lequel le dispositif de commande (140) est conçu pour régler, adapter et/ou réguler la deuxième position (72) d'après un paramètre de vol courant et/ou un état d'aéronef de l'aéronef à voilure fixe (110; 210).

3. Aéronef à voilure fixe (110) selon la revendication 1 ou 2,
dans lequel l'élément de charge (112) est situé sur l'extérieur du fuselage (111) de l'aéronef à voilure fixe (110).

4. Aéronef à voilure fixe (110) selon la revendication 3,
dans lequel l'élément de charge (112) est couplé à un élément de couplage (124) du dispositif actionneur (120) au moyen d'un raccord rotatif (113).

5. Aéronef à voilure fixe (110) selon la revendication 4,
dans lequel l'élément de charge (124) est couplé à l'élément de couplage (124) par l'intermédiaire du raccord rotatif (113) de telle façon qu'une orientation de l'élément de charge (112) par rapport au fuselage (111) de l'aéronef à voilure fixe (110) soit déterminée par la gravité.

6. Aéronef à voilure fixe (110) selon la revendication 4 ou la revendication 5,
dans lequel le dispositif actionneur (120) comprend un arbre de vis sans fin (126) ; et
dans lequel l'élément de couplage (124) est conçu avec un filetage intérieur, qui est placé sur un filetage extérieur de l'arbre de vis sans fin (126).

7. Aéronef à voilure fixe (110) selon l'une quelconque des revendications 1 à 6, comprenant :
des pieds de support (130) qui sont conçus de telle façon que l'aéronef à voilure fixe (110) puisse être placé verticalement sur une surface au sol, sur les pieds de support (130).

8. Aéronef à voilure fixe (110) selon la revendication 7,
dans lequel les pieds de support (130) sont disposés sur des ailes (132) de l'aéronef à voilure fixe (110) .

9. Aéronef à voilure fixe (210) selon la revendication 1 ou 2,
dans lequel l'élément de charge (212) est disposé à l'intérieur du fuselage (211).

10. Procédé d'utilisation d'un aéronef à voilure fixe (10 ; 110 ; 210), l'aéronef à voilure fixe (10 ; 110 ; 210) étant un aéronef à décollage vertical, le procédé comprenant les étapes suivantes :
changer (S01) une position (71, 72) d'un élément de charge (12 ; 112 ; 212) sur un fuselage (11 ; 111 ; 211) de l'aéronef à voilure fixe (10 ; 110 ; 210) pour déplacer un centre de gravité de l'aéronef à voilure fixe (10 ; 110 ; 210), l'élément de charge de (112 ; 212) étant disposé dans une première position (71) au cours d'une opération de décollage vertical et/ou au cours d'une opération d'atterrissage vertical de l'aéronef à voilure fixe (10 ; 110 ; 210) et étant disposé au moins dans une deuxième position (72) au cours d'un vol horizontal de l'aéronef à voilure fixe (10 ; 110 ; 210), la première position (71) étant située sur l'empennage de l'aéronef à voilure fixe (110 ; 210),
**caractérisé en ce que** l'élément de charge (112 ; 212) est déplacé de la première position (71) à la deuxième position (72), ce qui facilite la transition de l'aéronef à voilure fixe (10 ; 110 ; 210) entre l'opération de décollage vertical et le vol horizontal.

11. Procédé selon la revendication 10,
le procédé comprenant l'enregistrement (S02) d'au moins un paramètre de vol courant et/ou d'au moins un état d'aéronef courant ; et
dans lequel la deuxième position (72) est réglée, adaptée et/ou régulée d'après au moins un paramètre de vol courant enregistré et/ou au moins un état d'aéronef courant enregistré de l'aéronef à voilure fixe (110; 210).
